# EUROPÄISCHE PATENTSCHRIFT

(11) **EP 1 797 353 B1**
(45) Veröffentlichungstag und Bekanntmachung des Hinweises auf die Patenterteilung: **23.01.2008**
(21) Anmeldenummer: 05773931.0
(22) Anmeldetag: 12.08.2005
(51) Int. Cl.: F16H 57/02, F16H 55/17

(54) **VERFAHREN ZUR HERSTELLUNG EINES GETRIEBES, SOWIE EIN NACH DIESEM VERFAHREN HERGESTELLTES GETRIEBE**
METHOD FOR PRODUCING A GEARBOX, AND CORRESPONDING GEARBOX
PROCEDE DE FABRICATION D'UNE TRANSMISSION ET TRANSMISSION AINSI FABRIQUEE

(30) Priorität: 29.09.2004 DE 102004047184
(43) Veröffentlichungstag der Anmeldung: 20.06.2007
(73) Patentinhaber: ROBERT BOSCH GMBH, 70442 Stuttgart (DE)
(72) Erfinder: OBERLE, Hans-Juergen, 76437 Rastatt (DE); WEINMAN, Caroline, Renton, WA 9805 (US)
(86) Internationale Anmeldenummer: PCT/EP2005/053984
(87) Internationale Veröffentlichungsnummer: WO 2006/034918

(56) Entgegenhaltungen:
- WO-A-00/33445
- DE-A1- 4 211 186
- DE-U1- 8 712 501
- US-A- 1 462 675
- US-A- 3 103 800
- US-A- 4 416 650

## Beschreibung

### Stand der Technik

Die Erfindung betrifft ein Verfahren zur Herstellung eines Getriebes, bei dem ein Ritzel und ein Schneckenrad in einem Gehäuse gelagert sind, sowie ein nach diesem Verfahren hergestelltes Getriebe nach der Gattung der unabhängigen Ansprüche.

Mit der WO 00/33445 ist ein elektrischer Aktuator bekannt geworden, bei dem ein Getriebe innerhalb eines Gehäuses angeordnet ist, das zwei zusammenfügbare Gehäuseschalen aufweist. Dabei treibt ein Elektromotor mittels einer auf der Ankerwelle angeordneten Schnecke ein Schneckenrad an, das drehfest mit einem Ritzel verbunden ist. Das Ritzel treibt wiederum eine weitere Getriebestufe an, das mit einem Abtriebsritzel wirkverbunden ist. Das Schneckenrad und das Ritzel sind hierbei einstückig als ein gemeinsames Getriebebauteil ausgebildet, das auf einem im Gehäuse befestigten Lagerbolzen angeordnet ist. Ein solches einstückiges Getriebebauteil kann bspw. mittels Spritzgussverfahren aus Kunststoff oder Metall hergestellt werden.

Eine solche einteilige Ausbildung des Schneckenrads mit dem Ritzel hat den Nachteil, dass nach dessen Montage im Gehäuse aufgrund der Fertigungstoleranzen ein gewisses Axialspiel der Schneckenrad-Ritzel-Einheit, oder eine Verklemmung derselben innerhalb des Gehäuses auftritt. Dadurch verringert sich der Wirkungsgrad und die Lebensdauer des Getriebes. Wird die Schneckenrad-Ritzel-Einheit aus mehreren Teilen vor der Montage in das Gehäuse nicht ganz exakt zusammengefügt oder umspritzt, ergeben sich außerdem Rundlauftoleranzen des Schneckenrads und des Ritzels, die zu einem verschlechterten Geräuschbild führen können.

### Vorteile der Erfindung

Das erfindungsgemäße Herstellungsverfahren und das erfindungsgemäße Getriebe mit den kennzeichnenden Merkmalen der unabhängigen Ansprüche haben den Vorteil, dass aufgrund der separaten Ausbildung des Schneckenrads und des Ritzels diese beim Zusammenfügen des Gehäuses derart miteinander verbunden werden, dass die fertigungsbedingten axialen Toleranzen der Gehäuseteile und der Getriebebauteile ausgeglichen werden. Dadurch wird sowohl ein Axialspiel, als auch ein Verklemmen des mit dem Schneckenrad verbundenen Ritzels innerhalb des Gehäuses wirksam verhindert. Dadurch werden bei der Herstellung des Getriebes keine so hohen Toleranzanforderungen notwendig, wodurch die Teile bei gleichbleibender Produktqualität (aufgrund axialem Toleranzausgleich) billiger gefertigt werden können. Erfindungsgemäß werden bei diesem Herstellungsverfahren das Schneckenrad und das Ritzel jeweils als Einzeltteile mittels einer axialen Führung zwischen den beiden Gehäuseteilen angeordnet. Beim Zusammenfügen der beiden Gehäuseteile wird hierbei das Ritzel so lange axial in die Aussparung des Schneckenrads gepresst, bis das Gehäuse fest verschlossen ist. Durch die formschlüssige Pressverbindung zwischen dem Ritzel und dem Schneckenrad kann somit das antreibende Drehmoment zuverlässig vom Schneckenrad auf das Ritzel übertragen werden.

Durch die in den Unteransprüchen aufgeführten Maßnahmen ergeben sich vorteilhafte Weiterbildungen und Verbesserungen der in den unabhängigen Ansprüchen angegebenen Merkmale. So ist es von Vorteil, wenn sowohl das Schneckenrad als auch das Ritzel radial auf einem Lagerbolzen geführt werden, der zwischen den Gehäuseteilen angeordnet ist. Dadurch wird ein Verkanten oder Verkippen des Ritzels beim Einpressen in die Aussparung des Schneckenrads wirksam verhindert. Die toleranz-unempfindliche Verbindung des Schneckenrads mit dem Ritzel wird hierbei auf dem Lagerbolzen radial derart geführt, dass ein gleichmäßiger Rundlauf dieser Getriebebauteile erzielt, und sowohl die Geräuschbelästigung reduziert, als die Lebensdauer erhöht wird.

Weisen die beiden Gehäuseteile jeweils eine axiale Anlauffläche auf, an den das Ritzel und das Schneckenrad jeweils mit einer Stirnseite anliegen, kann das Axialspiel näherungsweise vollständig eliminiert werden, wobei das Ritzel und das Schneckenrad gleichzeitig mit minimalem Reibungsverlust zwischen den Gehäuseteilen drehbar sind. Dadurch wird eine lange Lebensdauer und eine geringe Geräuschbelästigung des Getriebes erzielt.

Um das axiale Einpressen des Ritzels in die Aussparungen des Schneckenrads zu erleichtern, weist die Aussparung verschiedene axiale Bereiche auf, in die die Stirnseite des Ritzels nacheinander eindringt. Im konisch ausgebildeten Übergangsbereich wird das Ritzel bezüglich der Aussparung zentriert und anschließend mit einer durch die Presspassung bestimmten axialen Montagekraft in den Pressbereich eingedrückt. Dadurch ist das Ritzel über die gesamte Betriebszeit zuverlässig axial im Schneckenrad fixiert.

Besonders günstig ist es, zur Momentenübertragung vom Schneckenrad auf das Ritzel einen Formschluss mittels der Außenverzahnung des Ritzels zu erzeugen. Hierzu weist die Aussparung ein korrespondierendes Innenprofil auf, das einen geringfügig kleineren Radius aufweist, als die Außenverzahnung des Ritzels. Durch einen solchen formschlüssigen Presssitz ist das Ritzel bezüglich einer axialen Verschiebung und bezüglich einer Verdrehung gegenüber dem Schneckenrad gesichert.

Die Wahl des Durchmesserverhältnisses zwischen der Außenverzahnung des Ritzels und dem Innenprofil der Aussparungen bestimmt die notwendige Axialkraft: zum Einpressen des Ritzels. Diese Axialkraft muss beim axialen Zusammenfügen der beiden Gehäuseteile aufgebracht werden, um einen zuverlässigen Presssitz zu erzeugen. Je nach Anwendung des Getriebes wird die Presspassung derart gewählt, dass die im Betrieb auftretende Axialkräfte die zur Montage notwendige axiale Montagekraft nicht übersteigen.

Bei dem nach dem erfindungsgemäßen Verfahren hergestellten erfindungsgemäßen Getriebe sind das Ritzel und das Schneckenrad durch die bei der Montage des Gehäuses aufgebrachte axiale Einpresskraft, mit der die Außenverzahnung in die Aussparung eingedrückt wird, miteinander verbunden, ohne dass ein zusätzlicher Montageschritt notwendig ist. Dabei hat die Ritzel-Schneckenrad-Einheit die gleiche mechanische Stabilität, wie ein einteiliges Getriebebauteil, allerdings mit dem zusätzlichen Vorteil, dass die axialen Fertigungs- und Montagetoleranzen ausgeglichen sind.

Die radiale Lagerung des erfindungsgemäß mit dem Schneckenrad verbundenen Ritzels kann sowohl durch einen Lagerbolzen des Gehäuses, als auch mittels an dem Ritzel und/oder Schneckenrad angeformten Lagerzapfen realisiert werden.

Werden das Ritzel und/oder das Schneckenrad mittels eines Lagerbolzens gelagert, der bspw. drehfest in einem Gehäuseteil befestigt ist, weisen das Ritzel und/oder das Schneckenrad ein axiales Durchgangsloch auf, mit dem diese jeweils direkt radial auf dem Lagerbolzen gelagert sind. Beim Schneckenrad ist hierbei die Durchgangsbohrung am Boden der Aussparung angeformt, sodass beim Einpressen des Ritzels in die Aussparung die beiden Bauteile durch den Lagerbolzen radial zueinander ausgerichtet werden.

Durch das Anformen von axialen Lagerzapfen an das Schneckenrad und/oder das Ritzel können diese direkt radial in den beiden Gehäuseteilen gelagert werden, wodurch auf den Lagerbolzen verzichtet werden kann. Die radiale Zentrierung beim Einpressen des Ritzels in das Schneckenrad erfolgt dabei durch die Formgebung der Aussparung.

Weist die Aussparung bspw. einen konischen Übergangsbereich mit einer bestimmten axialen Ausdehnung auf, so wird beim Einführen des Ritzels in die Aussparung das Ritzel zuerst exakt zentriert und anschließend in einen sogenannten Pressbereich der Aussparung eingedrückt, dessen axiale Ausdehnung derart gewählt ist, dass ein zuverlässiger Presssitz geschaffen ist.

Um zu gewährleisten, dass die axialen Toleranzen zwischen der Ritzel-Schneckenrad Einheit und dem Gehäuse vollständig ausgeglichen sind, ist die Aussparung so tief ausgebildet, dass deren Bodenfläche auch nach vollständigem Zusammenfügen der Gehäuseteile einen gewissen Abstand zur Stirnfläche des Ritzels aufweist.

### Zeichnungen

In den Zeichnungen sind verschiedene Ausführungsbeispiele eines erfindungsgemäßen Getriebes, sowie dessen Herstellungsverfahren dargestellt und in der nachfolgenden Beschreibung näher erläutert. Es zeigen
- Figur 1: eine schematische Darstellung der Montage des Getriebes,
- Figur 2: ein fertig montiertes Getriebe entsprechend der Ausführung aus Figur 1 und
- Figur 3: ein weiteres Ausführungsbeispiel eines fertig montierten Getriebes.

### Beschreibung der Ausführungsbeispiele

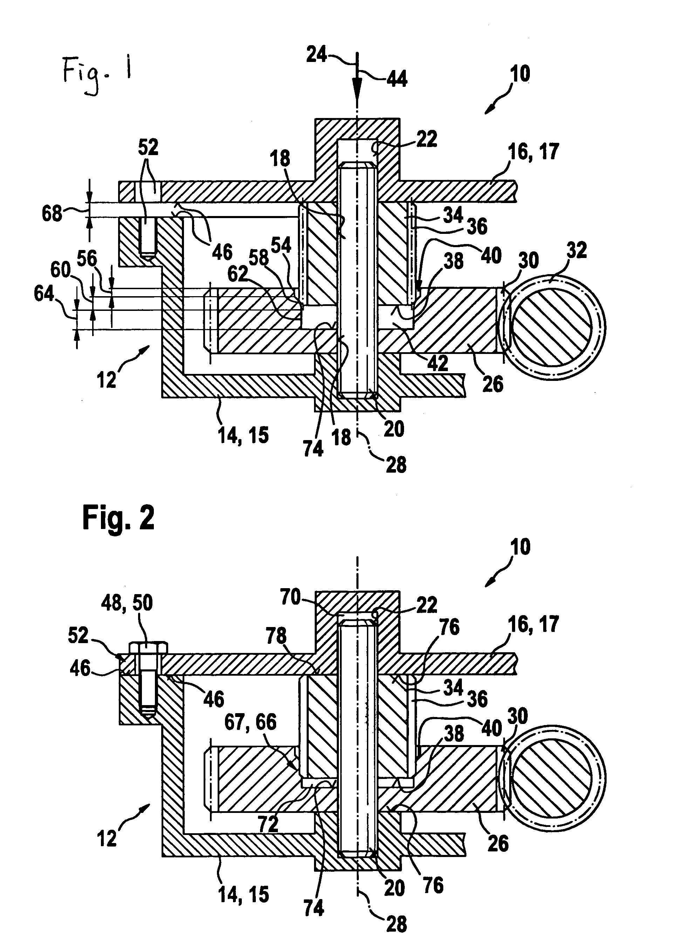

In Figur 1 ist ein Getriebe 10 mit einem Gehäuse 12 dargestellt, das zumindest ein erstes Gehäuseteil 14 und ein zweites Gehäuseteil 16 aufweist. Das erste Gehäuseteil 14 ist bspw. als topfförmige Gehäuseschale 15 ausgebildet, die mit dem als ein Deckel 17 ausgebildetem zweiten Gehäuseteil 16 verschließbar ist. Im Gehäuse 12 ist ein Lagerbolzen 20 angeordnet, der bspw. drehfest am ersten Gehäuseteil 14 befestigt, insbesondere eingespritzt ist. Das zweite Gehäuseteil 16 weist eine Aufnahme 22 auf, in die der Lagerbolzen 20 beim Zusammenfügen der beiden Gehäuseteil 14 und 16 in Axialrichtung 24 eingefügt wird. Zur Montage des Getriebes 10 wird ein Schneckenrad 26 entlang einer Achse 28 in das erste Gehäuseteil 14 eingesetzt, so dass dessen Schneckenverzahnung 30 mit einer antreibenden Schnecke 32 kämmt. Anschließend wird ein Ritzel 34, das als separates Bauteil ausgebildet ist, entlang der gleichen Achse 28 in das erste Gehäuseteil 14 eingefügt. Das Ritzel 34 weist eine Außenverzahnung 36 und eine axiale Stirnseite 38 auf, die vor dem Zusammenbau der beiden Gehäuseteile 14 und 16 lose auf einem Innenprofil 40 einer axialen Aussparung 42 des Schneckenrads 26 aufliegt. Zur Montage des Getriebes 10 wird das zweite Gehäuseteil 16 entlang der Achse 28 zum ersten Gehäuseteil 14 hin verschoben. Dabei wird das Ritzel 34 in Axialrichtung 24 in die Aussparung 42 des Schneckenrads 26 gepresst. Die hierzu notwendige Montagekraft 44 ergibt sich aus der konkreten Ausbildung der Presspassung zwischen dem Ritzel 34 und der Aussparung 42. Die beiden Gehäuseteile 16 und 14 werden solange gegeneinander gedrückt, bis sie sich an ihren Verbindungsstellen 46 berühren. Anschließend werden die Gehäuseteile 14 und 16 mit Verbindungselementen 48 - bspw. Schrauben 50 - in entsprechende Verbindungsaufnahmen 52 eingefügt, um das Gehäuse 12 fest zu verschließen. Im Ausführungsbeispiel weisen das Ritzel 34 und das Schneckenrad 26 eine axiale Durchgangsöffnung 18 auf, die vom Lagerbolzen 20 durchdrungen werden. Damit liegen das Ritzel 34 und das Schneckenrad zur Radiallagerung radial direkt am Lagerbolzen 20 an, ohne dass bspw. ein anderes Bauteil zwischen dem Schneckenrad 26 und dem Lagerbolzen 20 angeordnet ist. Der Lagerbolzen 20 wird in die Aufnahme 22 des zweiten Gehäuseteils 16 zur Radialabstützung eingeschoben. Zum exakten Einpressen des Ritzels 34 in die Aussparung 42 weist diese einen ersten radialspielbehafteten Bereich 54 mit der axialen Abmessung 56 auf, an den sich ein konisch ausgebildeter Übergangsbereich 58 mit einer axialen Länge 60 anschließt. Des weiteren weist die Aussparung 42 einen Pressbereich 62 mit einer axialen Länge 64 auf, der den eigentlichen Presssitz 66 mit dem Ritzel 34 bildet. Beim Einschieben des Ritzels 34 in die Aussparung 42 während des Zusammenfügens der beiden Gehäuseteile 14 und 16 liegt die Stirnseite 38 zuerst lose am Innenprofil 40, bspw. am konischen Übergangsbereich 58 an. In diesem Zustand weisen die beiden Gehäuseteile 14 und 16 einen Abstand 68 zueinander auf, der geringer ist, als ein Luftspalt 70 in der Aufnahme 22 zwischen dem Lagerbolzen 20 und dem Gehäuseteil 16. Der Spalt 68 zwischen den Gehäuseteile 14 und 16 ist in diesem Zustand auch geringer als die Summe der axialen Ausdehnungen 60 und 64 des Übergangsbereichs 58 und des Pressbereichs 62. Dadurch ist gewährleistet, dass das Ritzel 34 und das Schneckenrad 26 nach dem Zusammenfügen der beiden Gehäuseteile 14 und 16 nicht im Gehäuse 12 verklemmen. Der Spalt 68 ist dabei größer als die axiale Länge 60 des Übergangbereichs 58, damit das Ritzel 34 genügend weit in den Pressbereich 62 eingedrückt wird.

Dies ist in Figur 2 dargestellt, bei der das Ausführungsbeispiel gemäß Figur 1 nach vollendeter Montage fest verschlossen ist. Die Verbindungselemente 48 sind in entsprechenden Verbindungsaufnahen 52 aufgenommen, wodurch das Ritzel 34 soweit in die Aussparung 42 eingepresst ist, dass jegliches axiales Spiel zwischen der Ritzel-Schneckenrad-Einheit 34, 26 und dem Gehäuse 12 ausgeglichen ist und nicht klemmt. Daher weist das Getriebe 10 auch im fertig montierten Zustand noch einen Luftspalt 70 zwischen dem Lagerbolzen 20 und dem zweiten Gehäuseteil 16, sowie einen Abstand 72 zwischen der Stirnseite 38 des Ritzels 34 und einer Bodenfläche 74 der Aussparung 42 auf.

Der radialspielbehaftete Bereich 54 kann in einer Variation auch zusammen mit dem Übergangsbereich 58 konisch ausgebildet sein, wie dies in Figur 2 dargestellt ist. Wesentlich ist dabei, dass das Ritzel 34 mit seiner Außenverzahnung 36 genügend weit in den Pressbereich 62 des Aussparung 42 eingedrückt ist, um eine axiale und radiale Verschiebung zwischen dem Ritzel 34 und dem Schneckenrad 26 zu verhindern. In Figur 2 ist hierzu das Innenprofil 40 der Aussparung 42 als zur Außenverzahnung 36 korrespondierender Formschluss 67 ausgebildet, der eine drehfeste Übertragung hoher Drehmomente vom Schneckenrad 26 auf das Ritzel 34 ermöglicht. Die beiden Gehäuseteile 14 und 16 weisen jeweils eine axiale Lagerfläche 76 auf, an denen im fertig montierten Zustand das Ritzel 34 und das Schneckenrad 26 jeweils mit ihren axialen Anlaufflächen 78 anliegen.

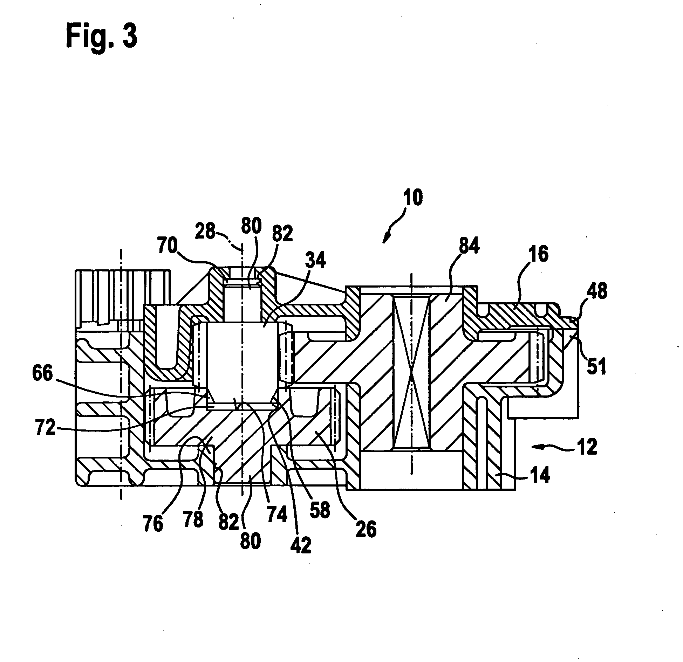

In Figur 3 ist ein alternatives Ausführungsbeispiel eines Getriebes 10 dargestellt, bei dem das Gehäuse 12 keinen Lagerbolzen 20 aufweist. Vielmehr weisen sowohl das Ritzel 34, als auch das Schneckenrad 26 einen axialen Lagerzapfen 80 auf, der in eine entsprechende Zapfenaufnahme 82 des Gehäuses 12 eingreift. Das Ritzel 34 und das Schneckenrad 26 werden bei der Montage des Gehäuses 12 ebenfalls mit den beiden Gehäuseteilen 14 und 16 entlang der Achse 28 ineinandergeschoben, derart, dass die Stirnseite 38 des Ritzels 34 fest in die Aussparung 42 eingepresst wird. Die radiale Lagerung der Ritzel-Schneckenrad-Einheit 34, 26 im Gehäuse 12 erfolgt hierbei über die Lagerzapfen 80, wobei das Ritzel 34 durch den Presssitz 66 bezüglich einem Verkippen gegenüber dem Schneckenrad 26 gesichert ist. Das Ritzel 34 greift hier in ein Abtriebselement 84, in das bspw. zwei flexible Antriebswellen zum Verstellen beweglicher Teile einfügbar sind. Zum Verbinden der beiden Gehäuseteil 14 und 16 weisen diese als Verbindungselemente 48 Rastelemente 51 auf, die einrasten, sobald die beiden Gehäuseteile 14 und 16 vollständig zusammengefügt sind. Als Alternative zum konischen Übergangsbereich 58 der Aussparung 42 in Figur 2 ist in Figur 3 am Ritzel 34 ein konischer Übergangsbereich 58 angeformt, um das Ritzel 34 gegenüber dem Schneckenrad 26 zu zentrieren.

Es sei angemerkt, dass hinsichtlich der in den Figuren und der Beschreibung gezeigten Ausführungsbeispiele vielfältige Kombinationsmöglichkeiten der einzelnen Merkmale untereinander möglich sind. So kann bspw. die radiale Lagerung des Schneckenrads 26 und des Ritzels 34 innerhalb des Gehäuses 12 variiert werden. Die erfindungsgemäße Verbindung zwischen dem Ritzel 34 und dem Schneckenrad 26 kann für verschiedene Getriebe-Typen, bspw. auch mehrstufige Getriebe 10 eingesetzt werden, wobei die Anzahl und Ausgestaltung der Gehäuseteile und der Getriebebauteile der entsprechenden Anwendung angepasst sind. Das Ritzel 34 kann dabei sowohl ausschließlich kraftschlüssig, als auch mittels kombiniertem Kraft- und Formschluss mit dem Schneckenrad 26 verbunden werden. Hierzu kann die konkrete Ausformung des Ritzels 34 am stirnseitigen Ende 38 oder auch das Innenprofil 40 der Aussparung 42 entsprechend angepasst werden. Das Ritzel 34 wird vorzugsweise aus einem härterem Werkstoff- bspw. Metall - gefertigt, das in einen weicheren Werkstoff des Schneckenrads 26 - bspw. Kunststoff - eingepresst wird. Das erfindungsgemäße. Getriebe 10 findet vorzugsweise Anwendung für die Verstellung beweglicher Teile im Kraftfahrzeug, insbesondere von Sitzteilen, ist jedoch nicht auf eine solche Anwendung beschränkt.

## Patentansprüche

1. Verfahren zur Herstellung eines Getriebes (10) mit axialem Toleranzausgleich, insbesondere zum Verstellen beweglicher Teile im Kraftfahrzeug, mit einem zumindest zwei Gehäuseteile (14, 16) aufweisendem Gehäuse (12), einem Ritzel (34) und einem Schneckenrad (26), wobei das Schneckenrad (26) eine zentrale axiale Aussparung (42) aufweist, **gekennzeichnet durch** folgende Schritte:
- das Schneckenrad (26) und das Ritzel (34) werden als separate Teile auf einer gemeinsamen zentralen Achse (28) in zumindest einem der beiden Gehäuseteile (14, 16) angeordnet
- die beiden Gehäuseteile (14, 16) werden entlang der Achse (28) zusammengefügt und verbunden, derart, dass bei der axialen Montage der beiden Gehäuseteile (14, 16) das Ritzel (34) drehfest in die Aussparung (42) des Schneckenrads (26) eingepresst wird

2. Verfahren nach Anspruch 1, **dadurch gekennzeichnet, dass** entlang der Achse (28) ein Lagerbolzen (20) im Gehäuse (12) angeordnet ist, auf dem das Schneckenrad (26) und/oder das Ritzel (34) radial gelagert werden.

3. Verfahren nach einem der Ansprüche 1 oder 2, **dadurch gekennzeichnet, dass** die beiden Gehäuseteile (14, 16) jeweils eine axiale Lagerfläche (76) aufweisen, an denen das Schneckenrad (26) und/oder das Ritzel (34) nach der fertigen Montage des Gehäuses (12) axial anliegen.

4. Verfahren nach einem der vorhergehenden Ansprüche, **dadurch gekennzeichnet, dass** das Ritzel (34) beim axialen Zusammenfügen der Gehäuseteile (14, 16) zuerst in einen spielbehafteten Bereich (54), anschließend in einen konischen Übergangsbereich (58) und danach in einen Pressbereich (62) der Aussparung (42) eingeschoben wird.

5. Verfahren nach einem der vorhergehenden Ansprüche, **dadurch gekennzeichnet, dass** das Ritzel (34) eine Außenverzahnung (36) aufweist, die beim axialen Zusammenfügen der Gehäuseteile (14, 16) in ein korrespondierendes Innenprofil (40) der Aussparung (42) greift, um einen drehfesten Formschluss (67) zu bilden.

6. Verfahren nach einem der vorhergehenden Ansprüche, **dadurch gekennzeichnet, dass** eine zur axialen Montage der Gehäuseteile (14, 16) notwendige axiale Montagekraft (44) größer ist, als eine während des Betriebs maximal auftretende Axialkraft zwischen dem Schneckenrad (26) und dem Ritzel (34).

7. Getriebe (10) zum Verstellen beweglicher Teile im Kraftfahrzeug, hergestellt insbesondere nach einem der vorhergehenden Ansprüche, mit einem Gehäuse (12), das ein erstes und ein zweites Gehäuseteil (14, 16) aufweist, die mittels einer axialen Montagekraft (44) miteinander verbindbar sind, und in dem Gehäuse (12) ein eine Außenverzahnung (36) aufweisendes Ritzel (34) und ein von einer Schnecke (32) angetriebenes Schneckenrad (26) angeordnet sind, wobei das Schneckenrad (26) eine zentrale axiale Aussparung (42) aufweist, **dadurch gekennzeichnet, dass** das Ritzel (34) drehfest in die Aussparung (42) greift, und dass das Ritzel (34) mittels der axialen Montagekraft (44) axial in die Aussparung (42) des Schneckenrads (26) einschiebbar ist.

8. Getriebe (10) nach Anspruch 7, **dadurch gekennzeichnet, dass** im Gehäuse (12) ein Lagerbolzen (20) angeordnet ist, auf dem das Schneckenrad (26) und/oder das Ritzel (34) radial gelagert ist

9. Getriebe (10) nach Anspruch 8, **dadurch gekennzeichnet, dass** das Schneckenrad (26) und/oder das Ritzel (34) eine axiale Durchgangsöffnung (18) zur direkten, unmittelbaren radialen Lagerung auf dem Lagerbolzen (20) aufweisen.

10. Getriebe (10) nach einem der vorhergehenden Ansprüche, **dadurch gekennzeichnet, dass** das Schneckenrad (26) und/oder das Ritzel (34) einen axialen Lagerzapfen (80) zur radialen Lagerung im Gehäuse (12) aufweisen.

11. Getriebe (10) nach einem der vorhergehenden Ansprüche, **dadurch gekennzeichnet, dass** die Aussparung (42) und/oder das Ritzel (34) einen konischen Übergangsbereich (58) und einen Pressbereich (62) mit axialen Ausdehnungen (60, 64) aufweisen.

12. Getriebe (10) nach einem der vorhergehenden Ansprüche, **dadurch gekennzeichnet, dass** die Aussparung (42) eine axiale Bodenfläche (74) aufweist, die nach der fertigen Montage des Gehäuses (12) mit einem axialen Abstand (72) zu einer Stirnseite (38) des Ritzels (34) angeordnet ist.

## Claims

1. Method for producing a gearbox (10) having axial tolerance compensation, in particular for adjusting movable parts in the motor vehicle, having a housing (12) which has at least two housing parts (14, 16), having a pinion (34) and a worm gear (26), the worm gear (26) having a central axial cut-out (42), **characterized by** the following steps:
- the worm gear (26) and the pinion (34) are arranged as separate parts on a common central axis (28) in at least one of the two housing parts (14, 16),
- the two housing parts (14, 16) are joined and connected along the axis (28) in such a way that the pinion (34) is pressed fixedly in terms of rotation into the cut-out (42) of the worm gear (26) during the axial assembly of the two housing parts (14, 16).

2. Method according to Claim 1, **characterized in that** a bearing pin (20) is arranged in the housing (12) along the axis (28), on which bearing pin (20) the worm gear (26) and/or the pinion (34) are/is mounted radially.

3. Method according to either of Claims 1 and 2, **characterized in that** the two housing parts (14, 16) have in each case one axial bearing face (76), against which the worm gear (26) and/or the pinion (34) bear/bears after completed assembly of the housing (12).

4. Method according to one of the preceding claims, **characterized in that**, during the axial joining together of the housing parts (14, 16), the pinion (34) is first of all pushed into a region (54) which is affected by play, subsequently into a conical transition region (58) and afterwards into a pressing region (62) of the cut-out (42).

5. Method according to one of the preceding claims, **characterized in that** the pinion (34) has an external toothing system (36) which engages into a corresponding inner profile (40) of the cut-out (42) during the axial joining together of the housing parts (14, 16), in order to form a rotationally fixed positively locking connection (67).

6. Method according to one of the preceding claims, **characterized in that** an axial assembly force (44) which is necessary for axial assembly of the housing parts (14, 16) is greater than a maximum occurring axial force during operation between the worm gear (26) and the pinion (34).

7. Gearbox (10) for adjusting movable parts in the motor vehicle, produced, in particular, according to one of the preceding claims, having a housing (12) which has a first and a second housing part (14, 16) which can be connected to one another by means of an axial assembly force (44), and a pinion (34) which has an external toothing system (36) and a worm gear (26) which is driven by a worm (32) are arranged in the housing (12), the worm gear (26) having a central axial cut-out (42), **characterized in that** the pinion (34) engages fixedly in terms of rotation into the cut-out (42), and **in that** the pinion (34) can be pushed axially into the cut-out (42) of the worm gear (26) by means of the axial assembly force (44).

8. Gearbox (10) according to Claim 7, **characterized in that** a bearing pin (20) is arranged in the housing (12), on which bearing pin (20) the worm gear (26) and/or the pinion (34) are/is mounted radially.

9. Gearbox (10) according to Claim 8, **characterized in that** the worm gear (26) and/or the pinion (34) have/has an axial through opening (18) for direct, immediate radial mounting on the bearing pin (20).

10. Gearbox (10) according to one of the preceding claims, **characterized in that** the worm gear (26) and/or the pinion (34) have/has an axial bearing pin (80) for radial mounting in the housing (12).

11. Gearbox (10) according to one of the preceding claims, **characterized in that** the cut-out (42) and/or the pinion (34) have/has a conical transition region (58) and a pressing region (62) with axial expanded portions (60, 64).

12. Gearbox (10) according to one of the preceding claims, **characterized in that** the cut-out (42) has an axial base face (74) which is arranged at an axial spacing (72) from an end side (38) of the pinion (34) after completed assembly of the housing (12).

## Revendications

1. Procédé de fabrication d'une transmission (10) à compensation axiale des tolérances notamment pour actionner des pièces mobiles dans un véhicule automobile, ayant un boîtier (12) formé d'au moins deux parties de boîtier (14, 16), un pignon (34) et une roue à vis (26), ayant une cavité centrale axiale (42),
**caractérisé par** les étapes suivantes :
- on installe la roue à vis (26) et le pignon (34) comme pièces séparées sur un axe central commun (28) dans au moins l'une des deux parties de boîtier (14, 16),
- on assemble et on relie les deux parties de boîtier (14, 16) le long de l'axe (28) de façon qu'en cas de montage axial des deux parties de boîtier (14, 16), le pignon (34) soit enfoncé par pression solidairement en rotation dans la cavité (42) de la roue à vis (26).

2. Procédé selon la revendication 1,
**caractérisé par**
un goujon de palier (20) le long de l'axe (28) dans le boîtier (12), portant radialement la roue à vis (26) et/ou le pignon (34).

3. Procédé selon l'une des revendications 1 ou 2,
**caractérisé en ce que**
le deux parties de boîtier (14, 16) ont chacune une surface de palier (76), axiale, contre laquelle s'appuie la roue à vis (26) et/ou le pignon (34) une fois le montage du boîtier (12) terminé.

4. Procédé selon l'une des revendications précédentes,
**caractérisé en ce que**
lors de l'assemblage axial des parties de boîtier (14, 16), le pignon (34) est tout d'abord déplacé dans une plage (54) avec du jeu puis, dans une plage transitoire (58), conique pour être engagé ensuite dans une zone pressée (62) de la cavité (42).

5. Procédé selon l'une des revendications précédentes,
**caractérisé en ce que**
le pignon (34) a une denture extérieure (36) qui, lors de l'assemblage axial des parties de boîtier (14, 16) pénètre dans un profil intérieur correspondant (40) de la cavité (42) pour réaliser une liaison par la forme (67), solidaire en rotation.

6. Procédé selon l'une des revendications précédentes,
**caractérisé en ce que**
la force de montage axial (44), nécessaire au montage axial des parties de boîtier (14, 16), est supérieure à une force axiale maximale produite pendant le fonctionnement et s'exerçant entre la roue à vis (26) et le pignon (34).

7. Transmission (10) pour actionner des pièces mobiles d'un véhicule automobile, fabriquées notamment selon l'une des revendications précédentes, comprenant un boîtier (12) formé d'une première et d'une seconde partie de boîtier (14, 16), ces deux moitiés étant reliées l'une à l'autre par une force axiale de montage (44) et le boîtier (12) loge un pignon (34 ayant une denture extérieure (36) et une roue à vis (26) entraînée par une vis (32),
la roue à vis (26) ayant une cavité axiale (42) centrale,
**caractérisée en ce que**
le pignon (34) pénètre solidairement en rotation dans la cavité (42) et se glisse axialement dans la cavité (42) de la roue à vis (26) sous l'effet de la force axiale de montage (44)

8. Transmission (10) selon la revendication 7,
**caractérisée par**
un goujon de palier (20) dans le boîtier (12) recevant radialement la roue à vis (26) et/ou le pignon (34).

9. Transmission (10) selon la revendication 8,
**caractérisée en ce que**
la roue à vis (26) ou le pignon (34) comporte un orifice traversant axial (18) pour le montage direct, radial, sans intermédiaire, sur le goujon de palier (20).

10. Transmission (10) selon l'une quelconque des revendications précédentes,
**caractérisée en ce que**
la roue à vis (26) et/ou le pignon (34) ont un tourillon de palier (80), axial pour le montage radial dans le boîtier (12).

11. Transmission (10) selon l'une quelconque des revendications précédentes,
**caractérisée en ce que**
la cavité (42) et/ou le pignon (34) ont une zone transitoire conique (58) et une zone pressée (62) avec des cavités axiales (60, 64).

12. Transmission selon l'une quelconque des revendications précédentes,
**caractérisée en ce que**
la cavité (42) a une surface de fond, axiale (74) installée après le montage du boîtier (12), terminé, avec une distance axiale (72) par rapport à la face frontale (38) du pignon (34).
